# EUROPEAN PATENT SPECIFICATION

(11) **EP 2 385 437 B1**
(45) Date of publication and mention of the grant of the patent: **31.10.2018**
(21) Application number: 10735935.8
(22) Date of filing: 01.02.2010
(51) Int. Cl.: G05D 16/06, F16K 17/30, F16K 31/365, F16K 49/00, F02M 21/02, F02M 21/06

(54) **PRESSURE REDUCING VALVE**
DRUCKMINDERUNGSVENTIL
SOUPAPE DE DÉCHARGE

(30) Priority: 02.02.2009 JP 2009021998; 07.05.2009 JP 2009112808
(43) Date of publication of application: 09.11.2011
(73) Proprietor: Keihin Corporation, Tokyo 163-0539 (JP)
(72) Inventor: YAMAMOTO Hiroaki, Kakuda-shi Miyagi 981-1505 (JP)
(74) Representative: Weickmann & Weickmann PartmbB
(86) International application number: PCT/JP2010/051342
(87) International publication number: WO 2010/087475

(56) References cited:
- EP-A1- 0 332 389
- DE-C1- 4 131 709
- GB-A- 966 346
- JP-A- 2002 276 493
- JP-A- 2002 276 493
- JP-A- 2006 119 981
- JP-A- 2006 119 981
- JP-A- 2008 180 312
- JP-A- 2008 269 459
- US-A- 4 224 860
- US-A- 4 267 855
- US-A1- 2004 231 726

## Description

### TECHNICAL FIELD

The present invention relates to a pressure reducing valve.

### BACKGROUND ART

A pressure reducing valve in which a valve shaft portion being coaxially connected to a valve body of a valve mechanism housed in a body is linked to a central part of a diaphragm is known from Patent Document 1.

Patent Document 1: Japanese Patent Application Laid-open No. 2008-180312

### DISCLOSURE OF INVENTION

### PROBLEMS TO BE SOLVED BY THE INVENTION

In the pressure reducing valve disclosed by Patent Document 1 above, the valve shaft portion provided continuously on the valve body which is incorporated in the body is linked to the central part of the diaphragm by placing the O ring, the first retainer, the diaphragm, the second retainer, and the washer successively one after another on the valve shaft portion, and then threadedly engaging and fastening the nut to the tip end portion of the valve shaft portion. Accordingly, in a state in which the shaft valve portion is incorporated into the body side, a work for fastening a nut needs to be performed, thereby deteriorating the workability.

The present invention has been accomplished in light of such circumstances, and it is an object thereof to provide a pressure reducing valve that can enhance the productivity at the time of assembling the pressure reducing valve.

Document JP 2008-180312 A discloses a pressure reducing valve in which, a valve mechanism including a valve body that can be seated on a valve seat which faces a valve chamber communicating with a high pressure passage and which has a valve hole opening in a central part is housed in a body, a valve shaft portion which is coaxially connected to the valve body so as to extend through the valve hole is linked to a central part of a diaphragm that is actuated in accordance with fluid pressure of a pressure action chamber, into which fluid pressure on a downstream side of the valve hole is guided, wherein a diaphragm rod is linked to the central part of the diaphragm, and the valve shaft portion and the diaphragm rod are linked by a thickening of the valve shaft portion inserted into a groove of the diaphragm rod.

The above object is solved according to the invention by a pressure reducing valve according to claim 1.

### MEANS FOR SOLVING THE PROBLEMS

In order to attain the above object, according to a first aspect of the present invention, not comprising all features of the invention according to claim 1, there is provided a pressure reducing valve in which, a valve mechanism including a valve body that can be seated on a valve seat which faces a valve chamber communicating with a high pressure passage and which has a valve hole opening in a central part is housed in a body, a valve shaft portion which is coaxially connected to the valve body so as to extend through the valve hole is linked to a central part of a diaphragm that is actuated in accordance with fluid pressure of a pressure action chamber, into which fluid pressure on a downstream side of the valve hole is guided, characterized in that a diaphragm rod is linked to the central part of the diaphragm, and the valve shaft portion and the diaphragm rod are linked by a resilient engagement portion between an outer periphery of an insertion part and an inner periphery of an insertion hole, the insertion part being provided on one of the valve shaft portion and the diaphragm rod so as to extend in an axial direction, the insertion hole being provided on the other of the valve shaft portion and the diaphragm rod so as to permit insertion of the insertion part there through.

Further, according to a second aspect, there is provided a pressure reducing valve in which, a valve mechanism including a valve body that can be seated on a valve seat which faces a valve chamber communicating with a high pressure passage and which has a valve hole opening in a central part is housed in a body, a valve shaft portion which is coaxially connected to the valve body so as to extend through the valve hole is linked to a central part of a diaphragm that has one face facing a pressure action chamber, into which fluid pressure on a downstream side of the valve hole is guided, and the other face facing a spring chamber, and a spring exhibiting a spring force that urges the diaphragm toward the side on which the volume of the pressure action chamber is decreased is housed in the spring chamber, characterized in that a diaphragm rod that integrally has a sandwich surface facing the one face side of the diaphragm is inserted through the central part of the diaphragm so as to sandwich a first retainer and an annular seal member between the one face of the diaphragm and the sandwich surface, the first retainer abutting against the one face of the diaphragm, the annular seal member being disposed between the first retainer and the sandwich surface; and at least a second retainer is sandwiched between the other face of the diaphragm and an engagement portion which is formed by crimping one end portion of the diaphragm rod on the spring chamber side,
thereby forming a diaphragm assembly including at least the diaphragm rod, the seal member, the first retainer, the diaphragm, and the second retainer, and the diaphragm rod of the diaphragm assembly is linked to the valve shaft portion.

According to a third aspect, there is provided a pressure reducing valve in which, a valve mechanism including a valve body that can be seated on a valve seat which faces a valve chamber communicating with a high pressure passage and which has a valve hole opening in a central part is housed in a body, a valve shaft portion which is coaxially connected to the valve body so as to extend through the valve hole is linked to a central part of a diaphragm that has one face facing a pressure action chamber, into which fluid pressure on a downstream side of the valve hole is guided, and the other face facing a spring chamber, and a spring exhibiting a spring force that urges the diaphragm toward the side on which the volume of the pressure action chamber is decreased is housed in the spring chamber, characterized in that a short cylindrical shaped rib forming a central hole in a central part of the diaphragm is integrally provided with the one face of the diaphragm so as to protrude therefrom; a diaphragm rod having a first sandwich surface, an annular second sandwich surface, and a third sandwich surface is inserted through the central hole of the diaphragm, the first sandwich surface sandwiching a first retainer between itself and the one face of the diaphragm, the second sandwich surface being abutted by an end portion of the rib at a position inward of the first retainer, the third sandwich surface being abutted by a second retainer which sandwiches the rib between itself and the second sandwich surface and which sandwiches the diaphragm and the first retainer between itself and the first sandwich surface; and at least the second retainer is sandwiched between the third sandwich surface and an engagement portion which is formed by crimping one end portion of the diaphragm rod on the spring chamber side, thereby forming a diaphragm assembly including at least the diaphragm rod, the first retainer, the diaphragm, and the second retainer, and the diaphragm rod of the diaphragm assembly is linked to the valve shaft portion.

According to a fourth aspect, in addition to the configuration of any one of the second and third aspects, an insertion hole into which an insertion part provided on one of the valve shaft portion and the diaphragm rod is inserted is provided on the other of the valve shaft portion and the diaphragm rod, and the valve shaft portion and the diaphragm rod are linked by a resilient engagement portion between an outer periphery of the insertion part and an inner periphery of the insertion hole.

According to a fifth aspect, in addition to the configuration of the fourth aspect, the resilient engagement portion comprises: ring-shaped engagement channels provided respectively on the outer periphery of the insertion part and the inner periphery of the insertion hole; and an engagement ring engaging with the engagement channels so that the engagement ring can resiliently expand and contract in a radial direction.

According to a sixth aspect of the present invention, in addition to the configuration of the first aspect of the present invention or according to a sixth aspect in addition to the configuration of the second aspect, the first retainer and the second retainer, which are each made of metal, abut against each other directly or via a metal washer within a central hole which is provided in the central part of the diaphragm so as to permit insertion of the diaphragm rod therethrough.

According to a seventh aspect of the present invention, in addition to the first aspect of the present invention or the sixth aspect of the present invention; or according to a seventh aspect in addition to the second or sixth aspect, a plate thickness of an inner peripheral edge part of the diaphragm is constant in a natural state, and with respect to a gap between the first and second retainers, a portion with a minimum gap is positioned further outward in a radial direction of the diaphragm than a portion with a maximum gap.

According to an eighth aspect of the present invention, in addition to the configuration of the first, sixth or seventh aspect of the present invention; or according to an eighth aspect in addition to the configuration of the second, sixth or seventh aspect, a channel having a substantially V-shaped cross- section is formed on at least one of faces on the diaphragm side of the first retainer and the second retainer so as to make part of the diaphragm bite into the channel.

### EFFECTS OF THE INVENTION

In accordance with the first aspect of the present invention and fourth aspect, the valve shaft portion can be coaxially linked to the diaphragm rod by a simple operation of merely inserting the insertion part into the insertion hole, and assembly of the pressure reducing valve becomes easy.

Further, in accordance with the second aspect, the diaphragm assembly including at least the diaphragm rod, the seal member, the first retainer, the diaphragm, and the second retainer is formed by crimping one end portion of the diaphragm rod; and thereby the diaphragm rod of the diaphragm assembly is linked to the valve shaft portion. Accordingly, it is possible to enhance the productivity compared with conventional attachment using a nut. Moreover, since the diaphragm rod can be held using a jig, a crimping method can be employed, whereas in a method in which respective components are stacked on a valve shaft portion as in a conventional method, since the valve shaft portion is incorporated into the body side, it is difficult to hold the valve shaft portion side using a jig; if crimping is carried out in this state, the crimping pressure acts on components of the pressure reducing valve, and there is a possibility of the components being deformed.

In accordance with the third aspect, the diaphragm assembly including at least the diaphragm rod, the first retainer, the diaphragm, and the second retainer is formed by crimping one end portion of the diaphragm rod; and thereby the diaphragm rod of the diaphragm assembly is linked to the valve shaft portion. Accordingly, it is possible to enhance the productivity compared with conventional attachment using a nut. Moreover, since the diaphragm rod can be held using a jig, a crimping method can be employed, whereas in a method in which respective components are stacked on a valve shaft portion as in a conventional method, since the valve shaft portion is incorporated into the body side, it is difficult to hold the valve shaft portion side using a jig; if crimping is carried out in this state, the crimping pressure acts on components of the pressure reducing valve, and there is a possibility of the components being deformed.

In accordance with the fifth aspect, it is possible to link the valve shaft portion and the diaphragm rod quickly and strongly to each other by a small and simple structure employing the engagement ring.

In accordance with the sixth aspect of the present invention or the sixth aspect, since the first and second retainers, which are each made of metal, abut against each other directly or via a metal washer, even if the diaphragm is degraded due to heat, etc. and the resilient force of the diaphragm is weakened, a gap between the first and second retainers is not changed, and linking of the diaphragm rod to the central part of the diaphragm is reliably maintained. Furthermore, in order to ensure sealing properties and resistance to coming out between the diaphragm and the first and second retainers, it is necessary to set the dimension between the first and second retainers at an appropriate value and control the compression allowance for the diaphragm by the first and second retainers at an appropriate value, and even if crimping is employed, due to the metal pieces abutting against each other the gap between the first and second retainers can be set with high precision, and thereby high reliability for sealing properties and resistance to coming out can be obtained. When the metal pieces do not abut against each other, control of the compression ratio has to be carried out only by setting of the crimping load, it is necessary to set the crimping load extremely precisely, and in order to find out an appropriate crimping load it is necessary to carry out an incremental test, etc. in which crimping is carried out with various loads and the compression ratio is measured each time. Moreover, the compression ratio cannot be directly measured after crimping. Therefore, in order to set an optimum crimping load, a large number of testing works and complicated operations are required, thus causing an increase in development cost.

In accordance with the seventh aspect of the present invention or the seventh aspect, the sealing properties between the diaphragm and the first and second retainers can be enhanced by compressing with a relatively large load the diaphragm at the portion having the minimum gap. In addition, when the load to pull toward the outward in the radial direction is applied on the inner peripheral part of the diaphragm, it is necessary to compress the portion positioned more radially inward than the minimum gap of the diaphragm in order to pass the portion having the minimum gap between the first and second retainers. Accordingly, even if an inexpensive flat diaphragm is used, the resistance to coming out of the diaphragm can be improved.

In accordance with the eighth aspect of the present invention or the eighth aspect, a V-shaped channel makes part of the diaphragm bite into the channel, thereby enhancing the sealing properties and the load of the resistance to coming out of the diaphragm.

### BRIEF DESCRIPTION OF DRAWINGS

[FIG. 1] FIG. 1 is a longitudinal sectional view of a pressure reducing valve for LPG fuel, which is also a sectional view taken along a line 1-1 in FIG. 2 (first embodiment).
[FIG. 2] FIG. 2 is a sectional view taken along a line 2-2 in FIG. 1 (first embodiment).
[FIG. 3] FIG. 3 is an enlarged view of a part shown by an arrow 3 in FIG. 1 (first embodiment).
[FIG. 4] FIG. 4 is an exploded perspective view of a gas passage cover and a body (first embodiment).
[FIG. 5] FIG. 5 is a sectional view taken along a line 5-5 in FIG. 1 (first embodiment).
[FIG. 6] FIG. 6 is a perspective view of the body in a state in which a heated fluid cover is removed in order to show a heated fluid passage structure (first embodiment).
[FIG. 7] FIG. 7 is a front view of the body in a state in which the gas passage cover is removed (first embodiment).
[FIG. 8] FIG. 8 is an enlarged view of a part shown by an arrow 8 in FIG. 1 for showing a linking structure of a diaphragm and a valve shaft part (first embodiment).
[FIG. 9] FIG. 9 is a longitudinal sectional view showing a state when attaching a diaphragm assembly (first embodiment).
[FIG. 10] FIG. 10 is an exploded longitudinal sectional view of a pressure reducing valve for LPG fuel in a state when assembled (first embodiment).
[FIG. 11] FIG. 11 is a longitudinal sectional view showing a second embodiment and corresponding to FIG. 9 (second embodiment).
[FIG. 12] FIG. 12 is a longitudinal sectional view showing a third embodiment and corresponding to FIG. 9 (third embodiment).

### BEST MODE FOR CARRYING OUT THE INVENTION

A mode for carrying out the present invention is explained below by reference to the attached drawings.

### EMBODIMENT 1

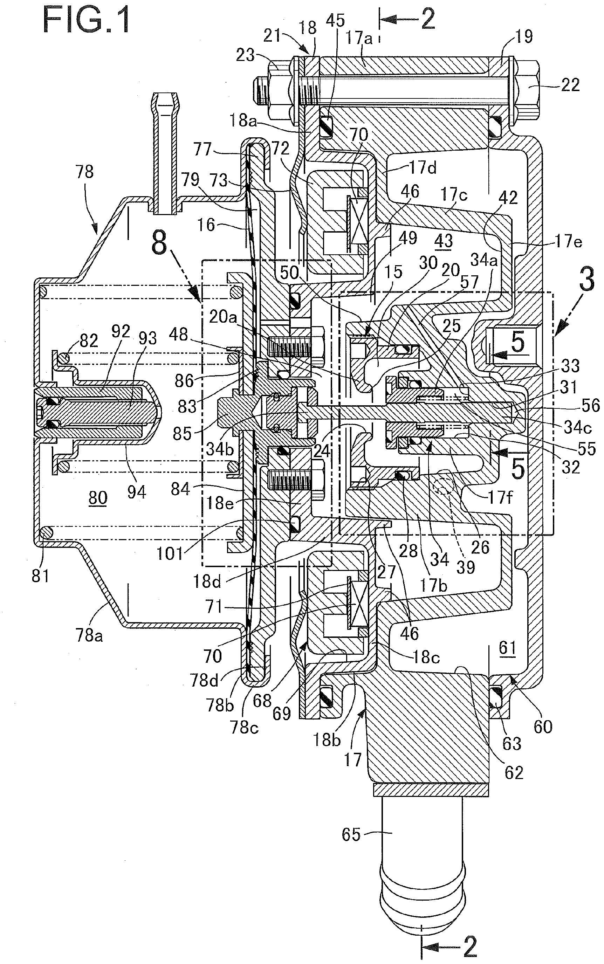

Embodiment 1 of the present invention is explained while referring to FIG. 1 to FIG. 10. First, in FIG. 1, a pressure reducing valve for LPG fuel is for reducing the pressure of LPG fuel and supplying it to an engine (not illustrated) and includes a valve mechanism 15 and a diaphragm 16 for making the valve mechanism 15 open and close.

The valve mechanism 15 is housed in a body 17; the body 17, a gas passage cover 18 secured to one face of the body 17, a heated fluid passage cover 19 secured to the other face of the body 17, and a valve seat member 20 screwed into the body 17 form a valve housing 21, and the body 17, the gas passage cover 18, and the heated fluid passage cover 19 are secured together by means of a plurality of bolts 22 and nuts 23.

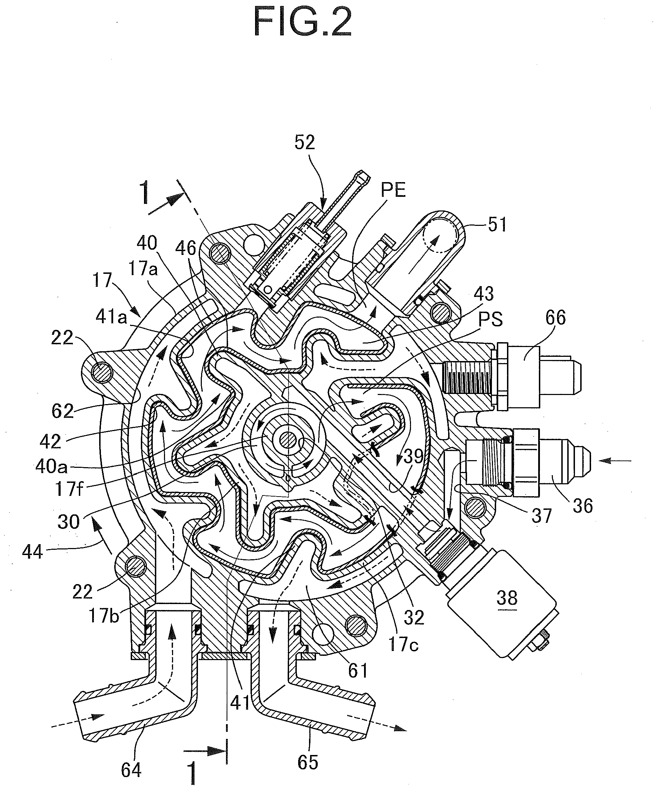

Referring in addition to FIG. 2, the body 17 integrally has a ring-shaped outer peripheral ring portion 17a, a central cylindrical portion 17b disposed in a central part of the body 17 so that one end thereof is disposed further inward than one end face of the outer peripheral ring portion 17a, a middle cylindrical portion 17c disposed between the outer peripheral ring portion 17a and the central cylindrical portion 17b so that one end thereof is disposed further inward than said one end face of the outer peripheral ring portion 17a, a first annular linking plate portion 17d linking said one end of the middle cylindrical portion 17c and a middle part of the outer peripheral ring portion 17a, and a second annular linking plate portion 17e linking the other end of the middle cylindrical portion 17c and the other end of the central cylindrical portion 17b, the middle cylindrical portion 17c being formed so as to increase in diameter in going toward said one end side thereof.

The valve seat member 20 is formed in a cylindrical shape having at one end a collar portion 20a protruding radially inward, and an annular valve seat 25 having a valve hole 24 opening in a central part is formed in the center of the collar portion 20a. The central cylindrical portion 17b is provided coaxially with a bottomed valve chamber-forming hole 26 having one end opening on one face side of the body 17, the valve seat member 20 is fitted into and fixed to the open end side of the valve chamber-forming hole 26 so as to be screwed into a threaded hole part 27 provided on one end side of the valve chamber-forming hole 26, and an O ring 28 is fitted around the outer periphery of the other end part of the valve seat member 20 so as to be in a resilient contact with the inner periphery of the central cylindrical portion 17b. A valve chamber 30 is thus formed within the central cylindrical portion 17b so that its outer periphery is defined by the inner periphery of the valve seat member 20 and the inner periphery of the central cylindrical portion 17b, and the valve seat 25 is disposed so as to face one end of the valve chamber 30. Moreover, the valve chamber 30 has a larger internal diameter than the diameter of the valve seat 25 and is formed within the valve housing 21 so that its side face follows a virtual circle having its center on an axis of the valve hole 24.

A small diameter cylindrical portion 17f is coaxially disposed within the central cylindrical portion 17b so that one end thereof is disposed at a position spaced further inward than the valve seat 25, and this small diameter cylindrical portion 17f is provided integrally with the other end of the central cylindrical portion 17b. This small diameter cylindrical portion 17f is coaxially provided with a bottomed guide hole 31 having an end part on the opposite side to the valve chamber 30 as a closed end, and a housing hole 32 having a larger diameter than the guide hole 31 and connected to the open end of the guide hole 31 via an annular step 33.

A valve body 34 that can be seated on the valve seat 25 is formed by coaxially connecting a cylindrical seat member having one end that can be seated on the valve seat 25 and a shaft member that extends through a central part of the seat member, and is arranged so as to have a large diameter portion 34a housed in the housing hole 32, a valve shaft portion 34b having a smaller diameter than the large diameter portion 34a, coaxially projecting from one end of the large diameter portion 34a, and extending through the valve hole 24, and a guide portion 34c having a smaller diameter than the large diameter portion 34a, coaxially projecting from the other end of the large diameter portion 34a, and being slidably fitted in the guide hole 31.

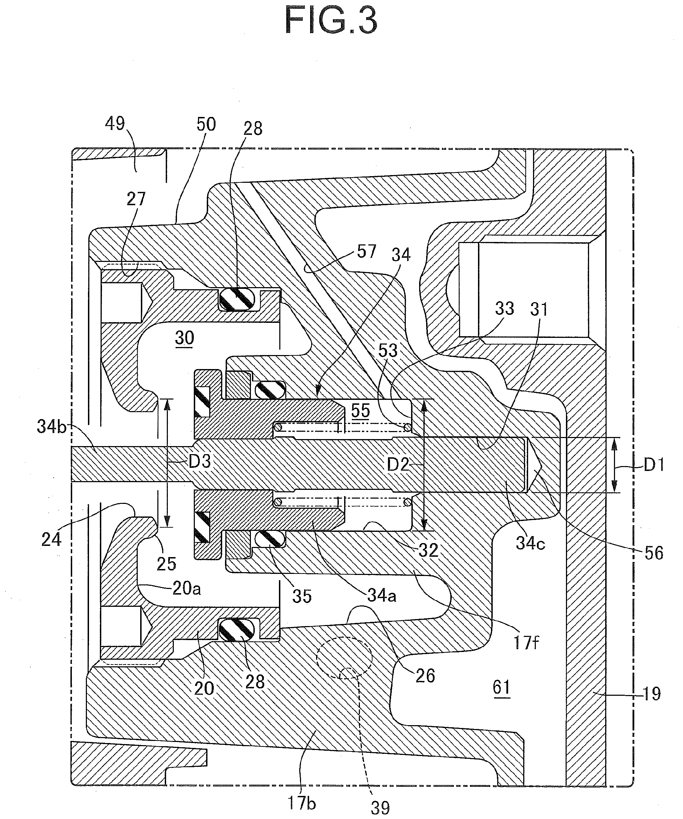

In FIG. 3, an O ring 35, which is an annular seal member, is disposed between an outer face of the large diameter portion 34a of the valve body 34 and an inner face of the housing hole 32 so as to be fitted to the outer face of the large diameter portion 34a or the inner face of the housing hole 32, and in Embodiment 1 the O ring 35, which is in resilient sliding contact with the outer periphery of the large diameter portion 34a, is fitted to the inner face of the housing hole 32. The external diameter of the guide portion 34c and an internal diameter D1 of the guide hole 31 are smaller than a seal diameter D2 provided by the O ring 35, and the seal diameter D2 is set so as to be substantially the same as a seat diameter D3 provided by the valve seat 25.

The valve body 34 is linked to the diaphragm 16 via a linking structure, which is described later, and is driven in the axial direction by means of the diaphragm 16, and in order to enhance the ability of the valve body 34 to follow the operation of the diaphragm 16, a coil-shaped spring 53 urging the valve body 34 toward the diaphragm 16 side is provided in a compressed state between the large diameter portion 34a of the valve body 34 and the annular step 33 in the body 17, and the set load of this spring 53 is set at a very small value that is only sufficient to make the valve body 34 follow the diaphragm 16.

As shown in FIG. 2, an inlet side pipeline-connecting member 36 to which a pipeline (not illustrated) for guiding LPG fuel from a pressurized tank is connected is mounted on a side face of the body 17. Furthermore, provided in an outer peripheral part of the body 17 is an inlet passage 37 that has one end communicating with the inlet side pipeline-connecting member 36 and extends in a substantially straight line. The other end of this inlet passage 37 is connected to a gas introduction passage 39 via a cut-off valve 38 mounted on the side face of the body 17, and the gas introduction passage 39 is provided in the body 17 so as to extend in a straight line while providing communication between the cut-off valve 38 and the valve chamber 30 in order to introduce LPG fuel that is to be reduced in pressure to the valve chamber 30.

In the meantime, the valve chamber 30 is formed within the valve housing 21 so that its side face follows a virtual circle having its center on the axis of the valve hole 24, the gas introduction passage 39 is provided in the body 17 so as to open in the valve chamber 30 in a direction tangential to the virtual circle, and the end of the gas introduction passage 39 opening into the valve chamber 30 is disposed at a position spaced from the valve seat 25 in the axial direction.

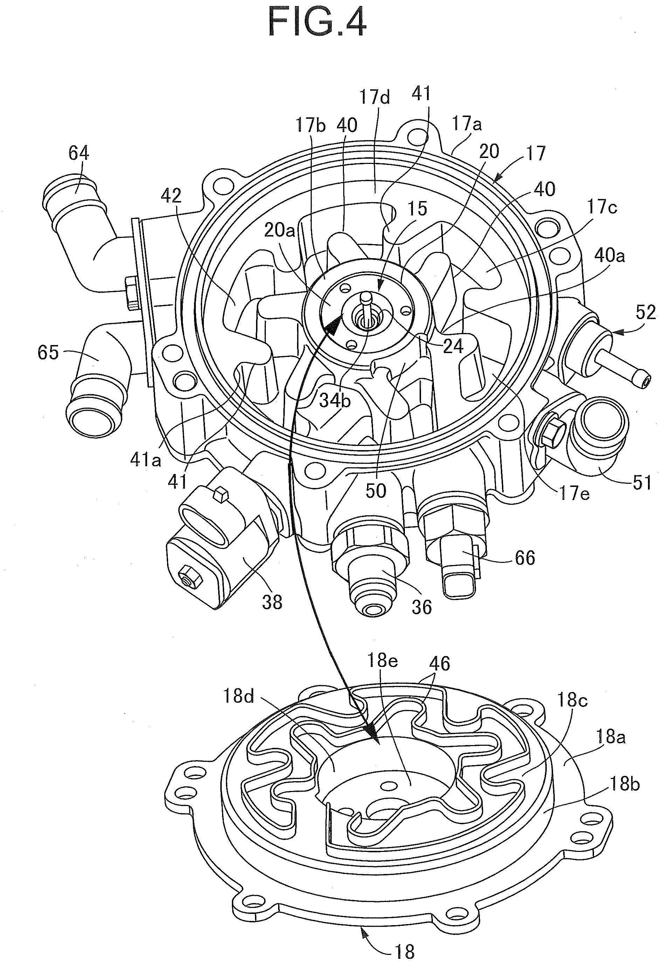

Referring in addition to FIG. 4, a plurality of fins 40 and fins 41 are integrally and projectingly provided with the outer face of the central cylindrical portion 17b and the inner face of the middle cylindrical portion 17c in the body 17, and a gas passage channel 42 opening on one face side of the body 17 is formed by the outer face of the central cylindrical portion 17b, the inner face of the middle cylindrical portion 17c, and the fins 40 and fins 41; covering this gas passage channel 42 with the gas passage cover 18 forms a gas passage 43 covering the valve mechanism 15 from its periphery, and the gas passage 43 is formed in a curved labyrinth shape by the plurality of fins 40 and fins 41.

Moreover, the fins 40 and fins 41 are projectingly provided on two mutually opposing wall faces, that is, an outer wall face of the central cylindrical portion 17b and an inner wall face of the middle cylindrical portion 17c, so as to form part of the gas passage channel 42, and are projectingly provided on the outer wall face of the central cylindrical portion 17b and the inner wall face of the middle cylindrical portion 17c so as to be disposed in turn in a main flow direction 44 for LPG fuel from a start point PS to an end point PE of the gas passage 43 while being inclined so as to be oriented toward the upstream side relative to the main flow direction 44.

Furthermore, base parts of the fins 40 and fins 41 are projectingly provided on the outer wall face of the central cylindrical portion 17b and the inner wall face of the middle cylindrical portion 17c while having curved portions 40a and curved portions 41a, and the base parts of the fins 40 and fins 41 are thereby provided integrally with the outer wall face of the central cylindrical portion 17b and the inner wall face of the middle cylindrical portion 17c so as to be thicker than tip end parts.

The gas passage channel 42 is provided in the body 17 in an inclined manner so that the distance between the pair of mutually opposing side walls of the gas passage channel 42, that is, the outer wall of the central cylindrical portion 17b and the inner wall of the middle cylindrical portion 17c, increases in going toward the gas passage cover 18 side, and the pressure reducing valve for LPG fuel is, as shown in FIG. 1, mounted on the vehicle in an attitude in which the axis of the valve mechanism 15 is horizontal.

In the meantime, the gas passage cover 18 integrally has a ring-shaped outer peripheral flat plate portion 18a with an annular seal member 45 disposed between itself and one face of the outer peripheral ring portion 17a of the body 17, an outside cylindrical portion 18b having one end part connected to the inner peripheral edge of the outer peripheral flat plate portion 18a so that it fits into the outer peripheral ring portion 17a, a ring-shaped middle flat plate portion 18c having its outer periphery connected to the other end of the outside cylindrical portion 18b so that it is close to and faces the first annular linking plate portion 17d of the body 17, an inside cylindrical portion 18d having one end connected to the inner periphery of the middle flat plate portion 18c and having one end of the central cylindrical portion 17b in the body 17 fitted therein, and a disk-shaped central flat plate portion 18e connected to the other end of the inside cylindrical portion 18d so as to face one end of the central cylindrical portion 17b across a gap.

As shown in FIG. 4, the gas passage cover 18 has a projecting wall 46 that is provided integrally so as to project from the inner face of the middle flat plate portion 18c. The projecting wall 46 projects into the gas passage channel 42 so as to follow the inner wall of the gas passage channel 42, that is, the outer wall face of the central cylindrical portion 17b and the inner wall face of the middle cylindrical portion 17c. The gas passage cover 18 is die-molded, and the projecting wall 46 is integrally molded during die-molding of the gas passage cover 18.

A pressure reducing chamber 48 communicating with the valve hole 24 is formed between the central flat plate portion 18e of the gas passage cover 18 and the central cylindrical portion 17b of the body 17, and a cutout 50 is provided in the outer periphery of one end part of the central cylindrical portion 17b, the cutout 50 forming between the gas passage cover 18 and the central cylindrical portion 17b a through passage 49 for providing communication between the pressure reducing chamber 48 and the gas passage 43. That is, the start point PS of the gas passage 43 is the end of the through passage 49 that opens to the gas passage 43.

An exit side pipeline-connecting member 51 connecting a pipeline (not illustrated) for guiding LPG fuel after reduction in pressure toward the engine side is mounted on a side face of the body 17 so as to communicate with the gas passage 43 at the end point PE, which is set so as to substantially correspond to the start point PS in the peripheral direction of the gas passage 43, and a relief valve 52 is mounted on the side face of the body 17 at a position close to the end point PE.

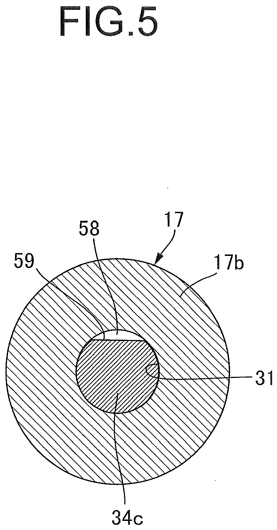

In the meantime, a large diameter back pressure chamber 55 is formed within the central cylindrical portion 17b between the large diameter portion 34a of the valve body 34 and the annular step 33 at the inner end of the housing hole 32 housing the large diameter portion 34a, and a back pressure introduction passage 57 for introducing LPG fuel pressure on the downstream side of the valve seat 25 to the large diameter back pressure chamber 55 is provided in the body 17 of the valve housing 21. Furthermore, a small diameter back pressure chamber 56 is formed between the closed end of the guide hole 31 and the guide portion 34c. As clearly shown in FIG. 5, a cutout 59 is provided in the outer face of the guide portion 34c or the inner face of the guide hole 31. The cutout 59 forms a through passage 58 providing communication between the large diameter back pressure chamber 55 and the small diameter back pressure chamber 56 between the outer face of the guide portion 34c and the inner face of the guide hole 31. In Embodiment 1 the cutout 59 that forms between itself and the inner face of the guide hole 31 the through passage 58 providing communication between the large diameter back pressure chamber 55 and the small diameter back pressure chamber 56 is provided in the outer face of the guide portion 34c so as to extend in the axial direction.

In the valve mechanism 15, LPG fuel flowing from the valve chamber 30 toward the valve hole 24 side is heated by first heating means 60 provided in the valve housing 21. This first heating means 60 is arranged so that heated fluid, for example, engine cooling water heated by the engine, flows through a heated fluid passage 61 provided in the valve housing 21 so as to surround the valve chamber 30.

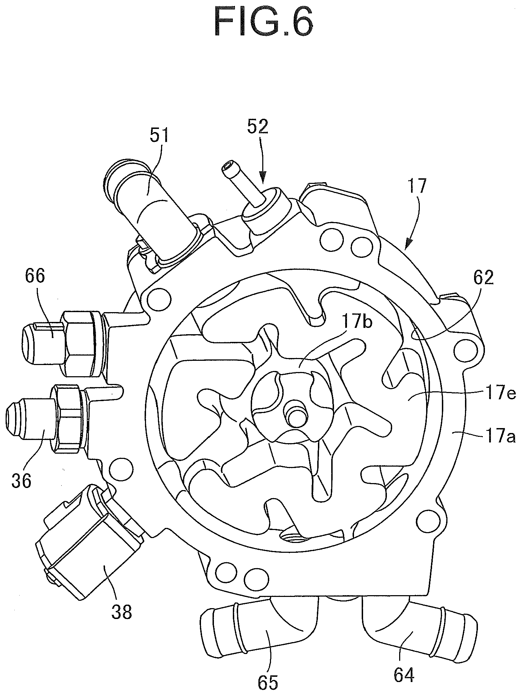

Referring in addition to FIG. 6, the heated fluid passage 61 is formed by covering a heated fluid passage channel 62, which is provided in the body 17 so as to open on the other face of the body 17, with the heated fluid passage cover 19 secured to the body 17 with an annular seal member 63 disposed between itself and the outer peripheral ring portion 17a of the body 17. The heated fluid passage channel 62 is formed so that the pair of wall faces on which the fins 40 and fins 41 are projectingly provided in the gas passage 43 are covered by the heated fluid passage 61, and part of the heated fluid passage 61 is also formed within the fins 40 and fins 41. Furthermore, the heated fluid passage 61 is formed so as to surround the valve chamber 30 from the side opposite to the valve seat 25.

Moreover, an inlet tube 64 is mounted on the body 17 so as to communicate with the heated fluid passage 61, and a pipeline (not illustrated) for guiding engine cooling water from the engine is connected to the inlet tube 64. An outlet tube 65 for guiding out engine cooling water from the heated fluid passage 61 is mounted on the body 17 so as to communicate with the heated fluid passage 61. Engine cooling water introduced from the inlet tube 64 to the heated fluid passage 61 flows across a range of substantially 360 degrees within the heated fluid passage 61 as shown by broken line arrows in FIG. 2 and is guided out via the outlet tube 65. Furthermore, mounted on the body 17 is a water temperature sensor 66 for detecting the temperature of engine cooling water flowing through the heated fluid passage 61.

LPG fuel flowing through the gas passage 43 is also heated by an electric heater 68, which is second heating means. This electric heater 68 is disposed in the valve housing 21 in an annular configuration so as to follow the gas passage 43. In Embodiment 1 the electric heater 68 is disposed on the outer face of the gas passage cover 18 so as to be housed in an annular recess 69 formed between the outside cylindrical portion 18b and the inside cylindrical portion 18d in the gas passage cover 18 and opening toward the side opposite to the body 17. The heated fluid passage 61 is provided in the valve housing 21 so that the gas passage 43 is sandwiched between at least part thereof and the electric heater 68.

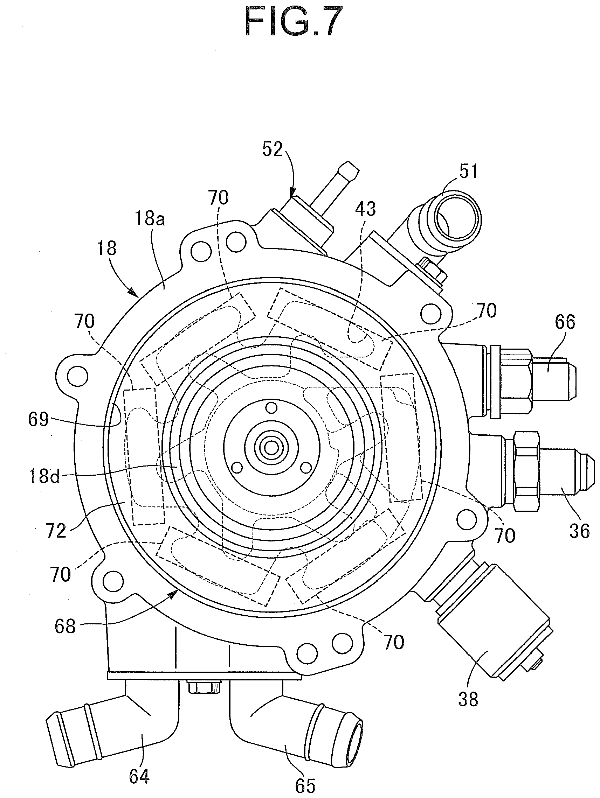

Referring in addition to FIG. 7, the electric heater 68 is held in a holder 72 while being arranged by sandwiching a plurality of PTC elements 70 between electrodes 71, and this holder 72 is housed in the recess 69. A wave washer 73 is sandwiched between the gas passage cover 18 and the nuts 23 securing together the body 17, the gas passage cover 18, and the heated fluid passage cover 19 with the bolts 22, and abutting the wave washer 73 against the holder 72 within the recess 69 allows the holder 72, that is, the electric heater 68, to be fixed to the outer face of the gas passage cover 18.

Moreover, the plurality of PTC elements 70 are disposed in an annular manner so as to follow the gas passage 43, and the electric heater 68 is disposed on the outer face of the gas passage cover 18 so that a section of the electric heater 68 that overlaps the gas passage 43 when viewed in the axial direction of the valve mechanism 15 is larger than a section that does not overlap the gas passage 43.

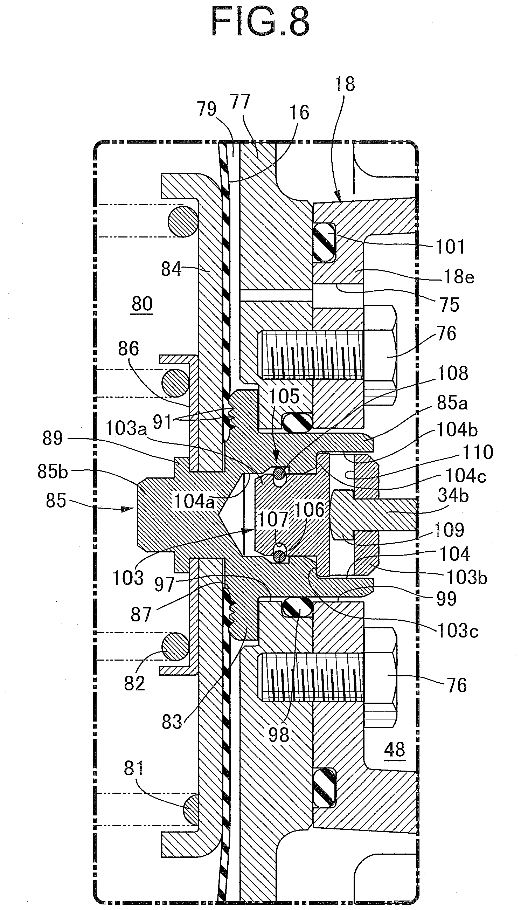

Referring in addition to FIG. 8, the diaphragm 16 is formed from a disk-shaped rubber plate having a constant plate thickness in the natural state for at least its peripheral part and central part, and in Embodiment 1 the diaphragm 16 is formed in a disk shape in which the plate thickness of the entirety is constant in the natural state. The peripheral part of the diaphragm 16 is held between a diaphragm flange 77 secured to the central flat plate portion 18e of the gas passage cover 18 by means of a plurality of bolts 76 and a bowl-shaped diaphragm cover 78 connected to the diaphragm flange 77 by crimping. A pressure action chamber 79 is formed between the diaphragm flange 77 and the diaphragm 16 so that one face of the diaphragm 16 faces the pressure action chamber 79. Pressure of the pressure reducing chamber 48 is introduced into the pressure action chamber 79 via a pressure introduction hole 75 provided in the central flat plate portion 18e of the gas passage cover 18 and the diaphragm flange 77. A spring chamber 80 is formed between the diaphragm 16 and the diaphragm cover 78 so that the other face of the diaphragm 16 faces the spring chamber 80. A coil-shaped first spring 81 and a coil-shaped second spring 82 for which the spring load is adjustable are provided in a compressed state between the diaphragm cover 78 and the diaphragm 16.

The diaphragm cover 78 is formed in a bowl shape by press forming of thin metal so as to integrally have a bottomed cylindrical portion 78a, a collar portion 78b, and a cylindrical tubular portion 78c. The bottomed cylindrical portion 78a has an end part on the side opposite to the diaphragm 16 as a closed end. The collar portion 78b radially outwardly extends from the open end of the bottomed cylindrical portion 78a. The cylindrical tubular portion 78c is provided so as to be connected to the outer periphery of the collar portion 78b and extending toward the diaphragm flange 77 side.

In the meantime, the tubular portion 78c of the diaphragm cover 78 abuts against the outer periphery of the diaphragm flange 77, and a tip end part of the tubular portion 78c is crimped radially inwardly so as to form an engagement portion 78d that is engaged with the outer periphery of the diaphragm flange 77. That is, the tubular portion 78c of the diaphragm cover 78 is fixed to the diaphragm flange 77 so as to hold the peripheral part of the diaphragm 16 in a compressed state between the outer peripheral part of the diaphragm flange 77 and the collar portion 78b.

A ring-shaped first retainer 83 abuts against a central part of a face of the diaphragm 16 facing the pressure action chamber 79, and a ring-shaped second retainer 84 abuts against a central part of a face of the diaphragm 16 facing the spring chamber 80, the ring-shaped second retainer 84 holding the central part of the diaphragm 16 between itself and the first retainer 83.

The first retainer 83 is provided integrally with a diaphragm rod 85. This diaphragm rod 85 integrally has a bottomed cylindrical portion 85a, the first retainer 83, and a shaft portion 85b, the cylindrical portion 85a having a shape in which one end is closed and the other end on the valve mechanism 15 side is open, the first retainer 83 protruding radially outwardly from the closed end part of the bottomed cylindrical portion 85a, the shaft portion 85b being coaxially connected to the middle of the closed end part of the bottomed cylindrical portion 85a. The shaft portion 85b, which has a smaller diameter than the bottomed cylindrical portion 85a, is inserted through a central hole 87 provided in the central part of the diaphragm 16.

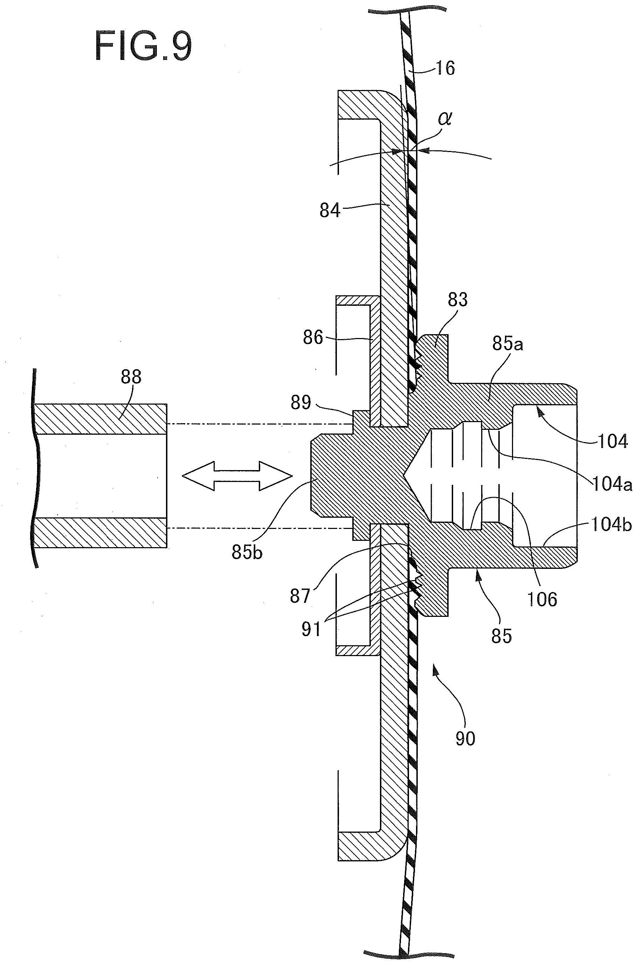

In FIG. 9, one end part of the diaphragm rod 85 projecting toward the spring chamber 80 side, that is, one end part of the shaft portion 85b, is crimped by means of a crimping jig 88, and at least the second retainer 84 is held between an engagement portion 89 formed by said crimping and said other face of the diaphragm 16. In Embodiment 1 the second retainer 84 and a spring-receiving member 86 are held between the engagement portion 89 and the diaphragm 16.

Crimping one end of the diaphragm rod 85 forms a diaphragm assembly 90 that includes the diaphragm rod 85 integrally having the first retainer 83, the diaphragm 16, the second retainer 84, and the spring-receiving member 86.

Moreover, the first and second retainers 83 and 84, which are each made of metal, abut against each other directly or via a metal washer within the central hole 87 provided in the central part of the diaphragm 16, and in Embodiment 1 part of the first retainer 83 is disposed within the central hole 87 and abuts directly against the second retainer 84.

Furthermore, the plate thickness of the inner peripheral edge part of the diaphragm 16 is constant in the natural state, and a face of the first retainer 83 facing the diaphragm 16 is formed inclined at an angle α so as to approach the second retainer 84 in going outward in the radial direction of the diaphragm 16 so that, with respect to a gap between the first and second retainers 83 and 84, a portion with a minimum gap is positioned further outward in the radial direction of the diaphragm 16 than a portion with a maximum gap.

Moreover, formed in at least one of faces of the first retainer 83 and the second retainer 84 on the diaphragm 16 side, in Embodiment 1 a face of the first retainer 83 on the diaphragm 16 side, are a plurality of channels 91 having a substantially V-shaped cross-section so as to make part of the diaphragm 16 bite into the channels.

The bottomed cylindrical portion 85a of the diaphragm rod 85 is axially movably inserted into a through hole 97 provided in a central part of the diaphragm flange 77, and an O ring 98 is fitted to the inner face of the through hole 97, the O ring 98 being in resilient sliding contact with the outer face of the bottomed cylindrical portion 85a. Furthermore, a through hole 99 is provided in the central flat plate portion 18e of the gas passage cover 18 mounted on the diaphragm flange 77 by means of the bolts 76, the bottomed cylindrical portion 85a being inserted into the through hole 99 and the through hole 99 coaxially communicating with the through hole 97. Moreover, an O ring 101 is disposed between the diaphragm flange 77 and the central flat plate portion 18e of the gas passage cover 18 so as to surround the pressure introduction hole 75 and the through hole 97.

Referring to FIG. 1, the first spring 81 is housed in the spring chamber 80 in a compressed state between the second retainer 84 and the closed end of the bottomed cylindrical portion 78a of the diaphragm cover 78. Furthermore, a support tube 92 is fixed to a central part at the closed end of the bottomed cylindrical portion 78a. An adjustment screw 93 is screwed into the support tube 92 so that one end thereof projects into the spring chamber 80, the adjustment screw 93 being operable so as to rotate from the exterior of the diaphragm cover 78. The second spring 82 is provided in a compressed state between the spring-receiving member 86 and a bottomed cylindrical spring-receiving member 94 covering the support tube 92 while one end of the adjustment screw 93 abuts against a central part at the closed end of the cylindrical spring-receiving member 94.

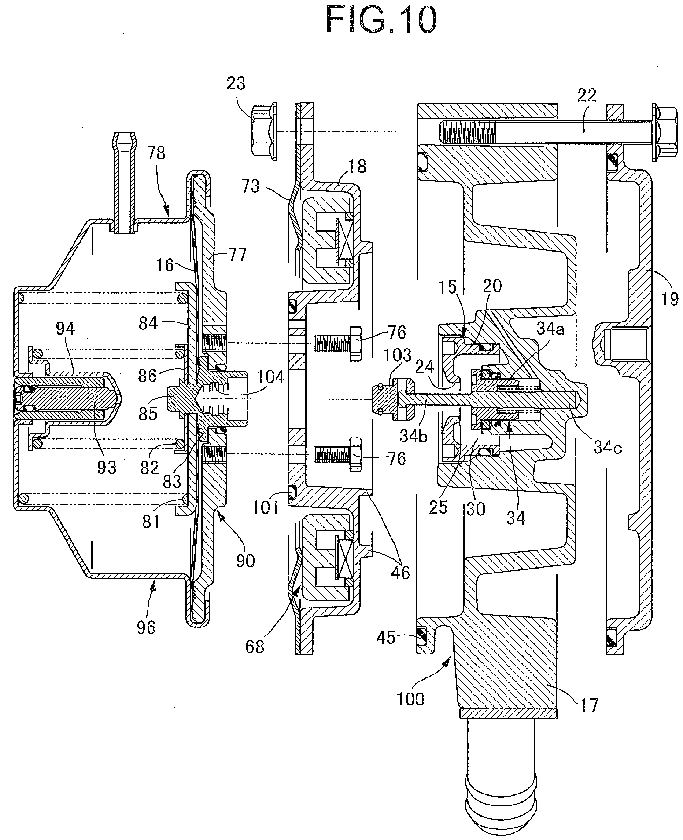

When assembling the pressure reducing valve, as shown in FIG. 10, a diaphragm assemblage 96 that includes at least the diaphragm 16, the diaphragm cover 78 forming the spring chamber 80 between itself and the diaphragm 16, the diaphragm flange 77 forming the pressure action chamber 79 between itself and the diaphragm 16 and connected to the diaphragm cover 78 so as to hold the peripheral part of the diaphragm 16 between itself and the diaphragm cover 78, the first and second springs 81 and 82 disposed between the diaphragm cover 78 and the diaphragm 16, and the diaphragm rod 85 linked to the central part of the diaphragm 16 and inserted through the diaphragm flange 77 is prepared in advance. In Embodiment 1, the diaphragm assembly 90 is formed so as to include the diaphragm rod 85 integrally having the first retainer 83, the diaphragm 16, the second retainer 84, and the spring-receiving member 86, and the diaphragm assemblage 96 is formed so as to include the diaphragm assembly 90.

On the other hand, a body assemblage 100 formed by housing at least the valve mechanism 15 in the body 17 is prepared, and the pressure reducing valve is assembled by attaching the diaphragm assemblage 96 and the body assemblage 100 to each other so that the diaphragm flange 77 and the body 17, and the diaphragm rod 85 and the valve shaft portion 34b are linked directly or via another member. In Embodiment 1, the gas passage cover 18 in a state in which the electric heater 68 is attached thereto is mounted on the diaphragm flange 77 of the diaphragm assemblage 96 by means of the bolts 76, the gas passage cover 18 and the heated fluid passage cover 19 are attached to the body 17 by means of the bolts 22 and the nuts 23, and the valve shaft portion 34b of the valve mechanism 15 is coaxially linked to the diaphragm rod 85.

An insertion part 103 is provided on one of the valve shaft portion 34b and the diaphragm rod 85, in this embodiment the valve shaft portion 34b, and a bottomed insertion hole 104 is provided in the other of the valve shaft portion 34b and the diaphragm rod 85, in Embodiment 1 the diaphragm rod 85, the insertion part 103 being inserted into the insertion hole 104. The valve shaft portion 34b and the diaphragm rod 85 are linked by means of a resilient engagement portion 105 between the outer periphery of the insertion part 103 and the inner periphery of the insertion hole 104.

A T-shaped engagement portion 109 is provided at the tip end of the valve shaft portion 34b, and a T-shaped engagement channel 110 for engaging with the engagement portion 109 is provided in the insertion part 103; by engaging the engagement portion 109 with the engagement channel 110 the insertion part 103 is provided at the tip end of the valve shaft portion 34b. Moreover, the insertion part 103 is formed by coaxially connecting a small diameter portion 103a on the forward end side and a large diameter portion 103b on the rear end side with a forward-facing annular step 103c formed therebetween.

On the other hand, the insertion hole 104 is coaxially provided in the bottomed cylindrical portion 85a of the diaphragm rod 85, a small diameter hole part 104a and a large diameter hole part 104b are coaxially connected so as to correspond to the stepped insertion part 103, and an annular step 104c is formed between the small diameter hole part 104a and the large diameter hole part 104b, the annular step 104c restricting an end of the insertion part 103 inserted into the insertion hole 104 by abutting against the step 103c of the insertion part 103.

The resilient engagement portion 105 is formed from ring-shaped engagement channels 106 and 107 provided respectively in the outer periphery of the small diameter portion 103a of the insertion part 103 and in the inner periphery of the small diameter hole part 104a of the insertion hole 104, and a C-shaped engagement ring 108 engaging with both the engagement channels 106 and 107 so that the engagement ring can resiliently expand and contract in the radial direction.

Operations of Embodiment 1 are now explained. The valve body 34, which can be seated on the valve seat 25 facing the valve chamber 30, is slidably fitted in the body 17 of the valve housing 21 with the O ring 35 disposed between itself and the body 17; the large diameter back pressure chamber 55 and the small diameter back pressure chamber 56, which are isolated from the valve chamber 30 via the O ring 35, are formed within the body 17 so that said other end side of the valve body 34 faces them; pressure of LPG fuel of the gas passage 43 on the downstream side of the valve seat 25 is introduced to the large diameter back pressure chamber 55 and the small diameter back pressure chamber 56; and the guide hole 31, which has a smaller diameter than the seal diameter D2 for the valve body 34 provided by the O ring 35, is provided in the body 17 so that the guide portion 34c coaxially provided on the valve body 34 is slidably fitted to the guide hole 31. For the above reasons, even if the ratio of the guide diameter D1, which is the diameter of the guide hole 31 for guiding the valve body 34, and the length of the sliding section of the valve body 34 (sliding section length/guide diameter) is ensured so that the valve body 34 will not tilt and gall, since the guide hole 31 guiding the valve body 34 has a small diameter, the length of the sliding section can be set short, and it is possible to reduce the dimensions of the pressure reducing valve. Furthermore, even for a pressure reducing valve for LPG fuel for which it is necessary to set a large seat diameter, it is possible to make the guide portion 34c small and reduce the dimensions of the pressure reducing valve.

Furthermore, the guide hole 31, which is formed in a bottomed shape with an end part opposite to the valve chamber 30 as a closed end, and the housing hole 32, which has a larger diameter than the guide hole 31 and communicates with the open end of the guide hole 31 via the annular step 33, are coaxially provided in the body 17 of the valve housing 21; the valve body 34 includes the large diameter portion 34a, which is housed in the housing hole 32 with the O ring 35 disposed between itself and the inner face of the housing hole 32 so as to form the large diameter back pressure chamber 55 between itself and the annular step 33, and the guide portion 34c, which is slidably fitted into the guide hole 31 while forming the small diameter back pressure chamber 56 between itself and the closed end of the guide hole 31; and pressure of LPG fuel of the gas passage 43 on the downstream side of the valve seat 25 is introduced to the large diameter back pressure chamber 55 and the small diameter back pressure chamber 56. For the above reasons, the back pressure chamber formed from the large diameter back pressure chamber 55 and the small diameter back pressure chamber 56 can be made compact overall.

Furthermore, since the back pressure introduction passage 57 for introducing pressure of LPG fuel within the gas passage 43 to the large diameter back pressure chamber 55 is provided in the body 17 of the valve housing 21, and the cutout 59, which forms in the outer face of the guide portion 34c between itself and the inner face of the guide hole 31 the through passage 58 for providing communication between the large diameter back pressure chamber 55 and the small diameter back pressure chamber 56, is provided in the outer face of the guide portion 34c, it is possible by the simple structure of the cutout 59 being provided in the outer face of the guide portion 34c to introduce fluid pressure on the downstream side of the valve seat 25 to the small diameter back pressure chamber 56.

In the meantime, since the valve body 34 is also guided by the O ring 35 disposed between the large diameter portion 34a and the body 17, and the O ring 35 and the guide hole 31 are positioned spaced from each other with the large diameter back pressure chamber 55 disposed therebetween, it is possible to suppress tilting of the valve body 34 more reliably.

In the meantime, since the valve chamber 30 of the valve mechanism 15 is formed in the valve housing 21 so that its side face follows a virtual circle having its center on the axis of the valve hole 24; the first heating means 60, which heats gas flowing from the gas valve chamber 30 to the valve hole 24 side, is provided in the valve housing 21; and the gas introduction passage 39, which introduces LPG fuel that is to be reduced in pressure to the valve chamber 30, is provided in the body 17 of the valve housing 21 so that it extends in a straight line in a direction tangential to the virtual circle and opens in the valve chamber 30 at a position spaced from the valve seat 25 in the axial direction. For the above reasons, LPG fuel introduced from the gas introduction passage 39 into the valve chamber 30 flows toward the valve hole 24 side while forming a swirl flow within the valve chamber 30, LPG fuel flows toward the valve hole 24 side while reliably contacting the inner peripheral face of the valve chamber 30 by virtue of centrifugal force generated by the swirl flow, and it is thus possible to enhance the efficiency of heat transfer to LPG fuel in the valve chamber 30 as a result of increased contact area of LPG fuel with the wall face of the valve chamber 30.

Furthermore, since the valve chamber 30 is formed so as to have a larger internal diameter than the diameter of the valve seat 25, flow of the liquid component of LPG fuel is concentrated in a portion close to the wall face within the valve chamber 30 by virtue of centrifugal force generated by the swirl flow within the valve chamber 30, flow of the gas component of LPG fuel is concentrated in the central side of the valve chamber 30, and it is thus possible to make the gas component of the LPG fuel flow preferentially toward the valve hole 24 side.

Moreover, since the first heating means 60 is formed so that engine cooling water, which is a heated fluid, flows through the heated fluid passage 61 provided in the valve housing 21 so as to surround the valve chamber 30, it is possible to enhance the efficiency of heat transfer to gas within the valve chamber 30 by effectively heating an inner peripheral wall face of the valve chamber 30, which has a circular cross section. Furthermore, the heated fluid passage 61 is provided in the valve housing 21 while having a section surrounding the valve chamber 30 from the side opposite to the valve seat 25, thereby further enhancing the efficiency of heat transfer to LPG fuel within the valve chamber 30.

In the meantime, the valve housing 21 includes the body 17 and the valve seat member 20 fixed to the body 17 while having the valve seat 25 and the valve hole 24, the body 17 is provided with the bottomed valve chamber-forming hole 26 opening on one face thereof; the valve seat member 20 forming the valve chamber 30 in cooperation with the body 17 is fixed to the body 17 on the open end side of the valve chamber-forming hole 26; the heated fluid passage channel 62 surrounding the side face and bottom face of the valve chamber-forming hole 26 is provided in the body 17 so as to open on the other face of the body 17; and the heated fluid passage cover 19 forming the heated fluid passage 61 by blocking the open end of the heated fluid passage channel 62 is secured to said other face of the body 17. For the above reasons, it is possible to easily form the heated fluid passage 61 around the valve chamber-forming hole 26 provided in the body 17 so as to form part of the valve chamber 30.

The gas passage 43 formed within the valve housing 21 is curved in a labyrinth shape by means of the plurality of fins 40 and fins 41 provided in the body 17 of the valve housing 21. Since the plurality of each of fins 40 and fins 41 are projectingly provided integrally with the two wall faces that oppose each other so as to form part of the gas passage 43, that is, the outer face of the central cylindrical portion 17b and the inner face of the middle cylindrical portion 17c in the body 17 so as to be disposed in turn in the main flow direction 44 of LPG fuel while being inclined so as to be oriented toward the upstream side relative to the main flow direction 44 from the start point PS to the end point PE of the gas passage 43, it becomes possible to increase the heat release area of each of the fins 40 and fins 41 by increasing the length of the fins 40 and fins 41, which curve the gas passage 43 in a labyrinth shape, and it also becomes possible to increase the flow path of LPG fuel within the gas passage 43, thus further enhancing the efficiency of heat transfer to LPG fuel. Moreover, since the fins 40 and fins 41 are oriented toward the upstream side relative to the main flow direction 44 of LPG fuel from the start point PS to the end point PE of the gas passage 43, the liquid component, which has high specific gravity in LPG fuel, is easily trapped by the base parts of the fins 40 and fins 41, thus suppressing the occurrence of a mixed gas-liquid state of the LPG fuel by preferentially heating the liquid component.

Furthermore, since the base parts of the plurality of fins 40 and fins 41 are provided integrally with the outer face of the central cylindrical portion 17b and the inner face of the middle cylindrical portion 17c of the body 17 so as to be thicker than the tip end parts of the fins 40 and fins 41, it is possible to suppress cooling of the fins 40 and fins 41 themselves by cool LPG fuel, thus contributing to an improvement of the heat transfer efficiency.

Moreover, since the two wall faces opposing each other so as to form part of the gas passage 43 are covered by the first heating means 60, due to the presence of the heating means 60 on both sides of the gas passage 43 the heat transfer efficiency can be further enhanced.

Furthermore, since the first heating means 60 is formed so that engine cooling water flows through the heated fluid passage 61 provided in the valve housing 21, and part of the heated fluid passage 61 is formed within the fins 40 and fins 41, engine cooling water can enter the fins 40 and fins 41, thus further enhancing the heat transfer efficiency.

Moreover, the gas passage 43 is formed by covering the gas passage channel 42, which is provided in the body 17 forming part of the valve housing 21 so as to open on one face of the body 17, with the gas passage cover 18, which is secured to said one face of the body 17 so as to form part of the valve housing 21; and the heated fluid passage 61 is formed by covering the heated fluid passage channel 62, which is provided in the body 17 so as to open on the other face of the body 17, with the heated fluid passage cover 19, which is secured to the body 17 so as to form part of the valve housing 21. For the above reasons, it is possible to easily form the gas passage 43 and the heated fluid passage 61.

Furthermore, the valve mechanism 15 for reducing the pressure of LPG fuel and introducing it to the gas passage 43 is housed in the valve housing 21; the gas passage 43 is provided in the valve housing 21 so that LPG fuel reduced in pressure by the valve mechanism 15 flows therethrough; and the gas passage 43 is disposed so as to cover the valve mechanism 15 from the periphery. For the above reasons, it is possible to incorporate a heating device into a pressure reducing valve for reducing the pressure of LPG fuel in a compact manner.

The projecting wall 46, which projects from the inner face of the gas passage cover 18 so as to project into the gas passage channel 42 while following the inner wall of the gas passage channel 42, is provided integrally with the gas passage cover 18, which forms the gas passage 43 by blocking the open end of the gas passage channel 42 provided so as to open said one face of the body 17. Accordingly, in a state in which the gas passage cover 18 is secured to the body 17 the projecting wall 46 following the inner wall of the gas passage channel 42 projects into the gas passage channel 42, which is curved in a labyrinth shape, it is thus possible to prevent LPG fuel from taking a shortcut by passing between the body 17 and the gas passage cover 18. Furthermore, since a seal member having a complicated shape is not used, there is no cost of material for a seal member, and there is no additional step of attaching a seal member.

Moreover, since the gas passage cover 18 is die-molded, and the projecting wall 46 is integrally molded during die-molding, it is possible to keep the cost of molding of the projecting wall 46 low.

Furthermore, the plurality of fins 40 and fins 41 for curving the gas passage channel 42 in a labyrinth shape are provided integrally with the body 17; the projecting wall 46 can prevent LPG fuel from taking a shortcut by passing between the gas passage cover 18 and the fins 40 and fins 41 for curving the gas passage channel 42 in a labyrinth shape; the contact area between the body 17 and LPG fuel can be increased by the fins 40 and fins 41; and the original function of the fins 40 and fins 41 can be exhibited fully.

Moreover, since the electric heater 68 for heating LPG fuel flowing through the gas passage 43 is disposed on the outer face of the gas passage cover 18 outside the gas passage 43, heat is transmitted from the electric heater 68 to LPG fuel of the gas passage 43 via the gas passage cover 18, and since the heat release area is increased by the projecting wall 46, the heat transfer efficiency can be enhanced.

The gas passage 43 is provided in the valve housing 21 so as to annularly surround the valve mechanism 15, and the electric heater 68 is disposed in the valve housing 21 in an annular arrangement so as to follow the gas passage 43. Accordingly, it is possible to enhance the efficiency of heat transfer from the electric heater 68 to LPG fuel while making the gas passage 43 in an annular shape to increase the passage length.

Moreover, since the electric heater 68 is disposed on the gas passage cover 18, which is secured to the body 17 while forming the gas passage 43 between itself and the body 17, it is possible to dispose the electric heater 68 in the proximity of the gas passage 43, thus enhancing the heat transfer efficiency. Furthermore, when the electric heater 68 is disposed within the gas passage 43, if the gas passage 43 has a complicated passage shape, it is necessary to make the shape of the electric heater 68 complicated so as to accord therewith, and a structure for sealing the electric heater 68 is also required. However, since the electric heater 68 is disposed on the outer face of the gas passage cover 18, not only is it easy to arrange the electric heater 68, but it is also unnecessary to employ a seal member. Moreover, forming the gas passage cover 18 from a thin plate enables transfer of heat to the interior of the gas passage 43 to be accelerated.

Furthermore, since the electric heater 68 is disposed on the outer face of the gas passage cover 18 so that a section that overlaps the gas passage 43 when viewed in the axial direction of the valve mechanism 15 is larger than a section that does not overlap, it is possible to enhance the efficiency of heat transfer from the electric heater 68 to LPG fuel flowing through the gas passage 43.

Moreover, the gas passage channel 42, which is provided in the body 17 so as to form the gas passage 43, is provided in the body 17 while the opposite side walls thereof are inclined so that a gap between the side walls increases in approaching the gas passage cover 18, and the valve housing 21 is mounted in the vehicle in an attitude in which the axial direction of the valve mechanism 15 is horizontal. Accordingly, the liquid component of LPG fuel flowing through the gas passage 43 is localized on the gas passage cover 18 side by running along the side wall of the gas passage channel 42, and heat exchange with the gas passage cover 18 is promoted, thereby heating and vaporization of the liquid component are carried out preferentially.

Furthermore, since the heated fluid passage 61 is provided in the valve housing 21 so as to be disposed along the gas passage 43 and sandwich the gas passage 43 between itself and the electric heater 68 in at least part thereof, it is possible to quickly heat LPG fuel by disposing the electric heater 68 in the proximity of the gas passage 43. In contrast thereto, if the electric heater 68 is disposed so as to sandwich the heated fluid passage 61 between itself and the gas passage 43, engine cooling water flowing through the heated fluid passage 61 deprives the electric heater 68 of heat, and it is difficult to heat LPG fuel quickly by the electric heater 68.

Furthermore, the outer peripheral edge of the diaphragm 16 linked to the valve shaft portion 34b of the valve mechanism 15 is held by the diaphragm flange 77, which is a member that is separate from the valve housing 21, and the diaphragm cover 78 connected to the outer periphery of the diaphragm flange 77, and the electric heater 68 is disposed between the diaphragm flange 77 and the valve housing 21 in the axial direction of the valve mechanism 15. Accordingly, if the pressure-receiving area of the diaphragm 16 is increased in order to suppress a change in control pressure in response to a change in the flow rate of LPG fuel and improve pressure regulation performance, the electric heater 68 needs to be disposed between the valve housing 21 and the diaphragm flange 77 so as to overlap the diaphragm flange 77. However, forming the diaphragm flange 77 from a member separate from the valve housing 21 makes mounting of the electric heater 68 on the valve housing 21 easy.

Moreover, the electric heater 68 is formed while sandwiching the PTC elements 70 between the electrodes 71, and since the PTC elements 70 have self temperature-controlling properties, it is easy to control the temperature of the electric heater 68 so that it is constant. Furthermore, since the electric heater 68 is arranged in an annular manner so that the plurality of PTC elements 70 follow the gas passage 43, it becomes possible to achieve an annular arrangement for the electric heater 68 at low cost. That is, the production cost is high when one PTC element is formed in an annular shape, whereas the use of a plurality of PTC elements with a simplified shape is possible and the annular arrangement of the electric heater 68 can be achieved at low cost.

The valve shaft portion 34b of the valve body 34 of the valve mechanism 15 housed in the body 17 is linked to the central part of the diaphragm 16, one face thereof facing the pressure action chamber 79 and the other face thereof facing the spring chamber 80; and the spring chamber 80 houses the first and second springs 81 and 82 exhibiting a spring force that urges the diaphragm 16 toward the side on which the volume of the pressure action chamber 79 is decreased. The diaphragm rod 85 integrally having the first retainer 83 abutting against said one face of the diaphragm 16 is inserted through the central part of the diaphragm 16; at least the second retainer 84, in Embodiment 1 the second retainer 84 and the spring-receiving member 86, is hold between said other face of the diaphragm 16 and the engagement portion 89 which is formed by crimping one end of the diaphragm rod 85 on the spring chamber 80 side, thereby forming the diaphragm assembly 90, which includes the diaphragm rod 85 integrally having the first retainer 83, the diaphragm 16, the second retainer 84, and the spring-receiving member 86. Accordingly, the diaphragm rod 85 of the diaphragm assembly 90 is linked to the valve shaft portion 34b, and thereby the productivity can be enhanced compared with conventional attachment using a nut. Moreover, since the diaphragm rod 85 can be held using a jig, a crimping method can be employed, whereas in a method in which respective components are stacked on a valve shaft as in a conventional method, since the valve shaft is incorporated into the body side, it is difficult to hold the valve shaft side using a jig; if crimping is carried out in this state, the crimping pressure acts on components of the pressure reducing valve, and there is a possibility of the components being deformed.

Furthermore, since the insertion part 103 is provided on one of the valve shaft portion 34b and the diaphragm rod 85, that is, the valve shaft portion 34b and the insertion hole 104, into which the insertion part 103 is inserted, is provided on the other of the valve shaft portion 34b and the diaphragm rod 85, that is, the diaphragm rod 85; and the valve shaft portion 34b and the diaphragm rod 85 are linked by the resilient engagement portion 105 between the outer periphery of the insertion part 103 and the inner periphery of the insertion hole 104. Accordingly, the valve shaft portion 34b can be coaxially linked to the diaphragm rod 85 by a simple operation of merely inserting the insertion part 103 into the insertion hole 104, and assembly of the pressure reducing valve becomes easy.

Moreover, the resilient engagement portion 105 is formed from the ring-shaped engagement channels 106 and 107, which are provided on the outer periphery of the insertion part 103 and the inner periphery of the insertion hole 104 respectively, and the engagement ring 108, which engages with both the engagement channels 106 and 107 so that the engagement ring can resiliently expand and contract in the radial direction, and the valve shaft portion 34b and the diaphragm rod 85 can be quickly and strongly linked to each other by a small and simple structure employing the engagement ring 108.

In the meantime, since the first and second retainers 83 and 84 are each made from metal, and the first and second retainers 83 and 84 abut against each other directly or via a metal washer within the central hole 87 provided in the central part of the diaphragm 16 for the diaphragm rod 85 to be inserted through. Accordingly, even if the diaphragm 16 is degraded due to heat, etc. and the resilient force of the diaphragm 16 is weakened, the gap between the first and second retainers 83 and 84 is not changed, and linking of the diaphragm rod 85 to the central part of the diaphragm 16 is reliably maintained. Furthermore, in order to ensure sealing properties and resistance to coming out between the diaphragm 16 and the first and second retainers 83 and 84, it is necessary to set the dimension between the first and second retainers 83 and 84 at an appropriate value and control the compression allowance for the diaphragm 16 by the first and second retainers 83 and 84 at an appropriate value, and even if crimping is employed, due to the metal pieces abutting against each other the gap between the first and second retainers 83 and 84 can be set with high precision, and thereby high reliability for sealing properties and resistance to coming out can be obtained. When the metal pieces do not abut against each other, control of the compression ratio has to be carried out only by setting of the crimping load, it is necessary to set the crimping load extremely precisely, and in order to find out an appropriate crimping load it is necessary to carry out an incremental test, etc. in which crimping is carried out with various loads and the compression ratio is measured each time. Moreover, the compression ratio cannot be directly measured after crimping. Therefore, in order to set an optimum crimping load, a large number of testing work pieces and complicated operations are required, thus causing an increase in development cost.

Furthermore, the plate thickness of the inner peripheral edge part of the diaphragm 16 is constant in the natural state, and with regard to the gap between the first and second retainers 83 and 84 a portion that has the minimum gap is positioned further outward in the radial direction of the diaphragm 16 than a portion that has the maximum gap. Accordingly, when a tensile load toward the outside in the radial direction acts on the inner peripheral part of the diaphragm 16, it is necessary for a portion of the diaphragm 16 that is present further toward the inside in the radial direction than the portion having the minimum gap to be compressed when passing through a section having the minimum gap between the first and second retainers 83 and 84, and even when an inexpensive diaphragm 16 with a flat shape is used, the load of the resistance to coming out of the diaphragm 16 can be improved.

Moreover, the plurality of channels 91 having a substantially V-shaped cross-section are formed on at least one of the faces on the diaphragm 16 side of the first retainer 83 and the second retainer 84, in Embodiment 1 the face of the first retainer 83 facing the diaphragm 16, so as to make part of the diaphragm 16 bite into the channels. Accordingly, due to the V-shaped channels 91 biting into part of the diaphragm 16, the sealing properties and the load of the resistance to coming out of the diaphragm 16 can be enhanced.

In the meantime, when assembling the pressure reducing valve, the diaphragm assemblage 96, which includes at least the diaphragm 16, the diaphragm cover 78 forming the spring chamber 80 between itself and the diaphragm 16, the diaphragm flange 77 connected to the diaphragm cover 78 so as to form the pressure action chamber 79 between itself and the diaphragm 16 and holding the peripheral part of the diaphragm 16 between itself and the diaphragm cover 78, the first and second springs 81 and 82 disposed between the diaphragm cover 78 and the diaphragm 16, and the diaphragm rod 85 linked to the central part of the diaphragm 16 and inserted through the diaphragm flange 77 is prepared in advance; the body assemblage 100, which is formed by housing at least the valve mechanism 15 in the body 17, is prepared in advance; and the pressure reducing valve is assembled by attaching the diaphragm assemblage 96 and the body assemblage 100 to each other by linking the diaphragm flange 77 and the body 17, and the diaphragm rod 85 and the valve shaft portion 34b directly or via another member. In this Embodiment 1, the gas passage cover 18 in a state in which the electric heater 68 is attached thereto is mounted on the diaphragm flange 77 of the diaphragm assemblage 96 by means of the bolts 76, the gas passage cover 18 and the heated fluid passage cover 19 are attached to the body 17 by means of the bolts 22 and the nuts 23, and the valve shaft portion 34b of the valve mechanism 15 is coaxially linked to the diaphragm rod 85.

There are therefore few restrictions when assembling the pressure reducing valve, and it is possible to increase the degree of freedom in design and enhance productivity. That is, the workability is enhanced by linking the diaphragm 16 and the diaphragm rod 85 to each other independently of the valve shaft portion 34b, and the operation of sandwiching the peripheral part of the diaphragm 16 between the diaphragm cover 78 and the diaphragm flange 77 can be carried out in a state in which there are no restrictions in terms of space, thus making it unnecessary to ensure wasteful space for positioning tools on the body 17 side and thereby reducing the dimensions of the pressure reducing valve. Furthermore, an airtightness test for the valve mechanism 15 is carried out on the body assemblage 100 side, and an airtightness test for the diaphragm 16 is carried out on the diaphragm assemblage 96 side, so that inspection of the functions of the body assemblage 100 and the diaphragm assemblage 96 can be carried out separately, thereby improving reliability and making it easy to confirm the state of attachment in each part. Moreover, a plurality of types of pressure reducing valves having different control pressure while employing the body assemblage 100 in common may be produced by preparing a plurality of types of diaphragm assemblages 96 by varying the spring constant for the springs 81 and 82 in the diaphragm assemblage 96 or varying the area of the diaphragm 16.

Furthermore, when preparing the diaphragm assemblage 96, the peripheral edge of the opening of the diaphragm cover 78 press-formed in a bowl shape is crimped and connected to the outer peripheral part of the diaphragm flange 77. Accordingly, use of a press-formed product as the diaphragm cover 78 and employment of crimping for connection of the diaphragm cover 78 to the diaphragm flange 77 enable the production cost to be decreased, and crimping can be carried out easily without any restrictions in terms of space when crimping. Moreover, compared with the conventional situation where the body 17 is held, since crimping may be carried out while holding the diaphragm flange 77, the crimping jig can be small and simplified, thus enhancing the productivity.

### EMBODIMENT 2

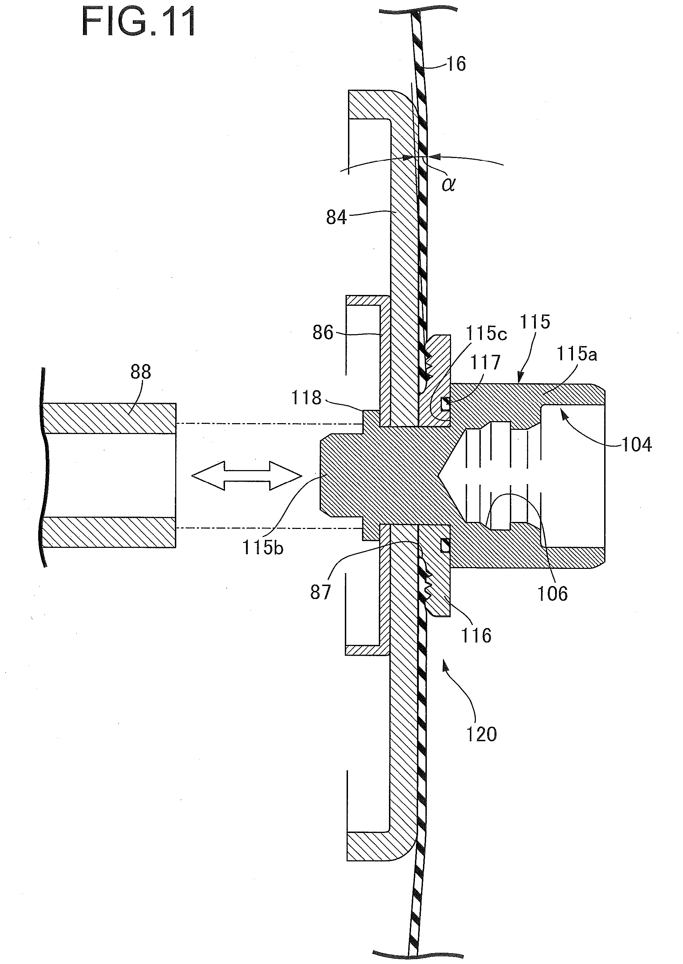

Embodiment 2 of the present invention will be explained while referring to FIG. 11. A diaphragm rod 115 including a sandwich surface 115c, which faces one face side of a diaphragm 16, sandwiches a first retainer 116 and an O ring 117 between the sandwich surface 115c and said one face of the diaphragm 16, and is inserted through a central part of the diaphragm 16. The first retainer 116 abuts against said one face of the diaphragm 16, and the O ring 117, which is an annular seal member, is disposed between the first retainer 116 and the sandwich surface 115c.

This diaphragm rod 115 integrally has a bottomed cylindrical portion 115a and a shaft portion 115b. The bottomed cylindrical portion 115a has a closed end so as to form a bottomed insertion hole 104 for inserting an insertion part 103 on a valve shaft portion 34b side (see Embodiment 1) thereinto to be resiliently engaged. The shaft portion 115b is coaxially connected to the middle of the closed portion of one end of the bottomed cylindrical portion 115a, has a smaller diameter than the bottomed cylindrical portion 115a, and is inserted through a central hole 87 provided in the central part of the diaphragm 16. Further, the annular sandwich surface 115c disposed on a circumference of a base part of the shaft portion 115b is formed on an outer surface of one end of the bottomed cylindrical part 115a.

One end of the diaphragm rod 115 inserted through the diaphragm 16, that is, one end of the shaft portion 115b is crimped by a crimping jig 88; and between the other face of the diaphragm 16 and an engagement portion 118 formed by the crimping, at least a second retainer 84 is sandwiched. In Embodiment 2, the second retainer 84 and a spring-receiving member 86 are sandwiched between the engagement portion 118 and the diaphragm 16.

Accordingly, by sandwiching the second retainer 84 and the spring-receiving member 86 between the other face of the diaphragm 16 and the engagement portion 118 formed by crimping said one end of the diaphragm rod 115, a diaphragm assembly 120 including the diaphragm rod 115, the O ring 117, the first retainer 116, the diaphragm 16, the second retainer 84, and the spring-receiving member 86 is formed; and the diaphragm rod 115 of the diaphragm assembly 120 is linked to the valve shaft portion 34b.

Also, with Embodiment 2, an effect similar to the above-described Embodiment 1 can be attained. That is, the diaphragm assembly 120 including at least the diaphragm rod 115, the O ring 117, the first retainer 116, the diaphragm 16, and the second retainer 84 is formed by crimping said one end of the diaphragm rod 115, and the diaphragm rod 115 of the diaphragm assembly 120 is linked to the valve shaft portion 34b, thereby enhancing the productivity compared with conventional attachment using a nut.

### EMBODIMENT 3

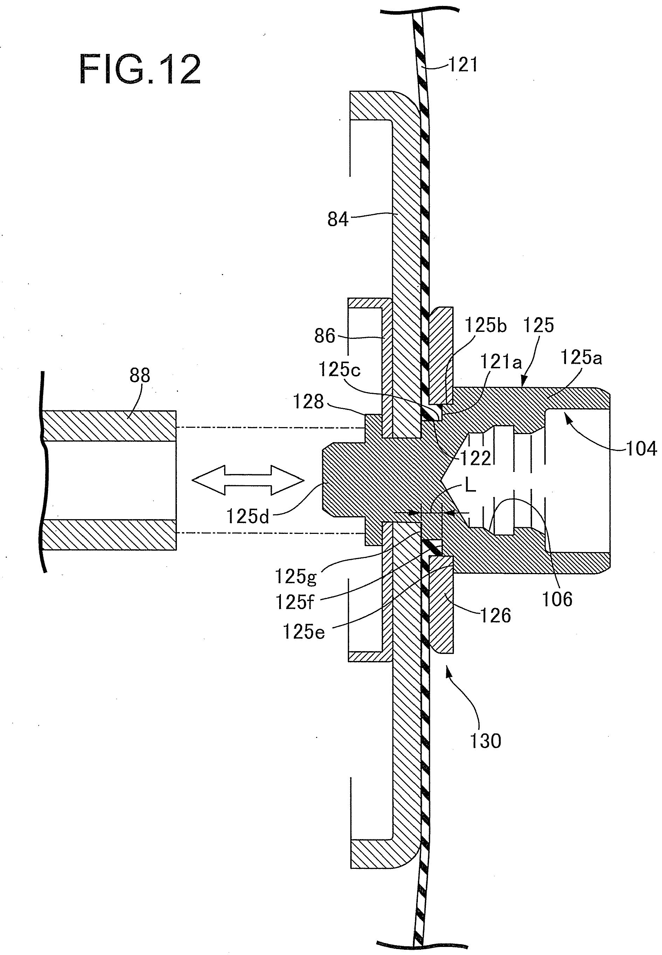

Embodiment 3 of the present invention will be explained while referring to FIG. 12. On a central part of a diaphragm 121 which has one face facing a pressure action chamber 79 (see Embodiment 1), a short cylindrical shaped rib 121a forming a central hole 122 and protruding from said one face of the diaphragm 121 is integrally provided. On the other hand, the diaphragm rod 125 has annular first, second, and third sandwich surfaces 125e, 125f, and 125g, which face in a same direction. This diaphragm rod 125 is inserted through the central part of the diaphragm 121 in such a way that: the first and second sandwich surfaces 125e and 125f face said one face side of the diaphragm 121; and an end of the rib 121a abuts against the second sandwich surface 125f while sandwiching a first retainer 126 between the diaphragm 121 and the first sandwich surface 125e.

The diaphragm rod 125 integrally has: a large diameter shaft portion 125a forming therein a bottomed insertion hole 104 for inserting an insertion part 103 on a valve shaft portion 34b side (see Embodiments 1 and 2) thereinto to be resiliently engaged; a first middle diameter shaft portion 125b having an outer periphery substantially corresponding to an outer periphery of the rib 121a of the diaphragm 121 and formed to have a smaller diameter than the large diameter shaft portion 125a; a second middle diameter shaft portion 125c that has an outer periphery which can be fitted into the central hole 122 of the rib 121a and that is formed to have a smaller diameter than the first middle shaft portion 125b; and a small diameter shaft portion 125d formed to have a smaller diameter than the second middle diameter shaft portion 125c. An annular first sandwich surface 125e facing said one face of the diaphragm 121 is formed between the large diameter shaft portion 125a and the first middle diameter shaft portion 125b. An annular second sandwich surface 125f against which a tip end of the rib 121a abuts is formed between the first and second middle diameter shaft portions 125b and 125c. An annular third sandwich surface 125g is formed between the second middle diameter shaft portion 125c and the small diameter shaft portion 125d. Further, a length L in a shaft's direction of the second middle shaft portion 125c is set so that it is slightly smaller than a length in the shaft's direction of the rib 121a in the natural state at the central part of the diaphragm 121.

A ring-shaped first retainer 126 which has an inner diameter substantially corresponding to an outer diameter of the first middle diameter shaft portion 125b is sandwiched between said one face of the diaphragm 121 and the first sandwich surface 125e of the diaphragm rod 125. One end part of the small diameter shaft part 125d of the diaphragm rod 125 that inserts through the diaphragm 121 to protrude toward a spring chamber 80 (see Embodiment 1) side is crimped by a crimping jig 88; and at least a second retainer 84 is sandwiched between the other face of the diaphragm 121 and an engagement portion 128 formed by the crimping. In Embodiment 3, the second retainer 84 and a spring-receiving member 86 are sandwiched between the engagement portion 128 and the diaphragm 121.

Accordingly, by sandwiching the second retainer 84 and the spring-receiving member 86 between the third sandwich surface 125g and the engagement portion 128 formed by crimping said one end of the diaphragm rod 125, a diaphragm assembly 130 including the diaphragm rod 125, the first retainer 126, the diaphragm 121, the second retainer 84, and the spring-receiving member 86 is formed so that the rib 121a at the central part of the diaphragm 121 is sandwiched between the second retainer 84 and the second sandwich surface 125f of the diaphragm rod 125 and the diaphragm 121 and the first retainer 126 are sandwiched between the second retainer 84 and the first sandwich surface 125e of the diaphragm rod 125. Furthermore, the diaphragm rod 125 of the diaphragm assembly 130 is linked to the valve shaft portion 34b.

Also, with Embodiment 3, similar effects of the above-described Embodiments 1 and 2 can be attained. That is, the diaphragm assembly 130 including at least the diaphragm rod 125, the first retainer 126, the diaphragm 121, and the second retainer 84 is formed by crimping said one end of the diaphragm rod 125, and the diaphragm rod 125 of this diaphragm assembly 130 is linked to the valve shaft portion 34b, thereby enhancing the productivity compared with conventional attachment using a nut. Furthermore, the rib 121a at the central part of the diaphragm 121 is sandwiched between the second retainer 84 and the second sandwich surface 125f of the diaphragm rod 125, so that the seal member 117 necessary for Embodiment 2 becomes unnecessary.

A mode for carrying out the present invention is explained above, but the present invention is not limited to the above-mentioned embodiments and may be modified in a variety of ways as long as the modifications do not depart from the scope thereof.

## Claims

1. A pressure reducing valve in which,
a valve mechanism (15) including a valve body (34) that can be seated on a valve seat (25) which faces a valve chamber (30) communicating with a high pressure passage (39) and which has a valve hole (24) opening in a central part is housed in a body (17),
a valve shaft portion (34b) which is coaxially connected to the valve body (34) so as to extend through the valve hole (24) is linked to a central part of a diaphragm (16) that is actuated in accordance with fluid pressure of a pressure action chamber (79), into which fluid pressure on a downstream side of the valve hole (24) is guided,
wherein a diaphragm rod (85, 115, 125) is linked to the central part of the diaphragm (16), and
the valve shaft portion (34b) and the diaphragm rod (85, 115, 125) are linked by a resilient engagement portion (105) between an outer periphery of an insertion part (103) and an inner periphery of an insertion hole (104), the insertion part (103) being provided on one of the valve shaft portion (34b) and the diaphragm rod (85, 115, 125) so as to extend in an axial direction, the insertion hole (104) being provided on the other of the valve shaft portion (34b) and the diaphragm rod (85, 115, 125) so as to permit insertion of the insertion part (103) there through,
wherein the resilient engagement portion (105) comprises:
ring-shaped engagement channels (106, 107) provided respectively on the outer periphery of the insertion part (103) and the inner periphery of the insertion hole (104); and
an engagement ring (108) engaging with the engagement channels (106, 107) so that the engagement ring can resiliently expand and contract in a radial direction.

## Patentansprüche

1. Druck reduzierendes Ventil, in welchem,
ein Ventilmechanismus (15), umfassend einen Ventilkörper (34), welcher an einen Ventilsitz (25) eingesetzt werden kann, welcher zu einer Ventilkammer (30) weist, welche mit einem Hochdruckdurchgang (39) in Verbindung steht, und welcher ein Ventilloch (24) aufweist, welches sich in einen zentralen Teil öffnet, in einem Körper (17) aufgenommen ist,
ein Ventilschaftabschnitt (34b), welcher mit dem Ventilkörper (34) koaxial verbunden ist, um sich durch das Ventilloch (24) zu erstrecken, mit einem zentralen Teil einer Membran (16) verbunden ist, welche in Einklang mit einem Fluiddruck einer Druckwirkungskammer (79) betätigt wird, in welche Fluiddruck an einer stromabwärtigen Seite des Ventillochs (24) geführt wird,
wobei eine Membranstange (85, 115, 125) mit dem zentralen Teil der Membran (16) verbunden ist, und
der Ventilschaftabschnitt (34b) und die Membranstange (85, 115, 125) durch einen elastischen Eingriffsabschnitt (105) zwischen einem äußeren Umfang eines Einsatzteils (103) und einem inneren Umfang eines Einsatzlochs (104) verbunden sind, wobei der Einsatzteil (103) an einem aus dem Ventilschaftabschnitt (34b) und der Membranstange (85, 115, 125) bereitgestellt ist, um sich in einer axialen Richtung zu erstrecken, wobei das Einsatzloch (104) an dem anderen aus dem Ventilschaftabschnitt (34b) und der Membranstange (85, 115, 125) bereitgestellt ist, um ein Einsetzen des Einsatzteils (103) dort hindurch zu erlauben,
wobei der elastische Eingriffsabschnitt (105) umfasst:
ringförmige Eingriffskanäle (106, 107), welche jeweils an dem äußeren Umfang des Einsatzteils (103) und dem inneren Umfang des Einsatzlochs (104) bereitgestellt sind; und
einen Eingriffsring (108), welcher mit den Eingriffskanälen (106, 107) in Eingriff steht, so dass sich der Eingriffsring in einer radialen Richtung elastisch ausdehnen und zusammenziehen kann.

## Revendications

1. Soupape de décharge dans laquelle,
un mécanisme de soupape (15), comprenant un élément de soupape (34) qui peut prendre appui sur un siège de soupape (25) qui fait face à une chambre de soupape (30) communiquant avec un passage haute pression (39) et qui a un trou de soupape (24) s'ouvrant dans une partie centrale, est logé dans un corps (17),
un tronçon d'axe de soupape (34b), qui est connecté de façon coaxiale à l'élément de soupape (34) de façon à s'étendre à travers le trou de soupape (24), est relié à une partie centrale d'un diaphragme (16) qui est actionnée en fonction d'une pression de fluide dans une chambre d'action de pression (79), dans laquelle la pression de fluide sur un côté aval du trou de soupape (24) est guidée,
dans laquelle une tige de diaphragme (85, 115, 125) est reliée à la partie centrale du diaphragme (16), et
le tronçon d'axe de soupape (34b) et la tige de diaphragme (85, 115, 125) sont reliés par une section d'accrochage élastique (105) entre une périphérie externe d'une partie d'insertion (103) et une périphérie interne d'un trou d'insertion (104), la partie d'insertion (103) étant prévue sur l'un du tronçon d'axe de soupape (34b) et de la tige de diaphragme (85, 115, 125) de façon à s'étendre dans une direction axiale, le trou d'insertion (104) étant prévu sur l'autre du tronçon d'axe de soupape (34b) et de la tige de diaphragme (85, 115, 125) de façon à permettre l'insertion de la partie d'insertion (103) à travers celle-ci,
dans laquelle le tronçon d'accrochage élastique (105) comprend :
des canaux d'accrochage en forme d'anneau (106, 107) prévus respectivement sur la périphérie externe de la partie d'insertion (103) et sur la périphérie interne du trou d'insertion (104) ;
un anneau d'accrochage (108) s'accrochant aux canaux d'accrochage (106, 107) pour que l'anneau d'accrochage puisse se dilater et se contracter dans une direction radiale.
